# EUROPEAN PATENT SPECIFICATION

(11) **EP 3 081 086 B1**
(45) Date of publication and mention of the grant of the patent: **12.09.2018**
(21) Application number: 15163813.7
(22) Date of filing: 16.04.2015
(51) Int. Cl.: A01N 43/90, A01N 51/00, A01N 53/00, A01P 7/04

(54) **SYNERGISTIC INSECTICIDAL COMPOSITION COMPRISING IMIDACLOPRID, BIFENTHRIN AND ABAMECTIN**
SYNERGISTISCHE INSEKTIZIDE ZUSAMMENSETZUNG ENTHALTEND IMIDACLOPRID, BIFENTHRIN UND ABAMECTIN
COMPOSITION INSECTICIDE SYNERGIQUE COMPRENANT IMIDACLOPRID, BIFENTHRIN ET ABAMECTIN

(43) Date of publication of application: 19.10.2016
(73) Proprietor: Rotam Agrochem International Company Limited, Chai Wan (HK)
(72) Inventor: Bristow, James Timothy, Chai Wan, (HK)
(74) Representative: Becker Kurig Straus

(56) References cited:
- WO-A1-03/011031
- WO-A1-2011/015220
- DATABASE CA [Online] CHEMICAL ABSTRACTS SERVICE, COLUMBUS, OHIO, US; LU, WENDONG ET AL: "Fipronil-containing insecticide composition with synergistic effect", XP002741984, retrieved from STN Database accession no. 151:214005 & CN 101 480 192 A (QINGDAO AODIS BIOLOGICAL TECHNOLOGY CO., LTD., PEOP. REP. CHINA) 15 July 2009 (2009-07-15)

## Description

The present invention relates to a synergistic insecticidal composition comprising (A) imidacloprid, (B) bifenthrin and (C) abamectin. The present invention is also related to a method to prevent and/or treat insect infestations in plants, plant parts and/or surrounding by applying the synergistic insecticidal composition of the invention.

### BACKGROUND

Insect infestations represent a major threat to economically important agricultural crops, like soybean and cotton. The yield of plants, for example, soybean and cotton, is adversely impacted by insect attack.

Chemical control is an important way for preventing and controlling pests in agriculture. However, current agents show unsatisfied effect to certain kinds of pests. Furthermore, many pests have developed resistance to commonly used pesticides due to long time use of pesticides. Therefore, there is an urgent need to develop new methods and pesticides to control these pests. Moreover, the environmental and economic requirements imposed on modem-day insecticides are continually increasing, with regard, for example, to the spectrum of action, toxicity, selectivity, application rate, formation of residues, and favorable preparation ability. Since there may be problems, for example, with resistances developing to known active compounds, a constant task is to develop new insecticide agents which in some areas at least have advantages over their known counterparts.

Neonicotinoid insecticides are a well-known class of insecticides with a broad spectrum of insect control. They are developed as insecticides with reduced toxicity compared to previously used organophosphate and carbamates that provide similar broad spectrum control to numerous crop-damaging insects. The neonicotinoids are now the widely used insecticide in the world and registered in more than 120 countries. Examples of neonicotinoids are imidacloprid, thiamethoxam, clothianidin, acetamiprid, thiacloprid, dinotefuran, sulfoxaflor and nitenpyram.

However, experience with the single active straight formulation insecticides worldwide indicates that there is a high risk of development of resistant insect subpopulations. Resistance has been reported worldwide in an increasing number of insects of field crops, fruit, vegetable and so on.

In order to avoid or at least reduce the incidence of resistant strains mixing the neonicotinoid insecticides with other insecticide class has been suggested to reduce selection pressure towards resistance.

Synthetic pyrethroids are synthesized derivatives of naturally occurring pyrethrins, which are taken from pyrethrum, the oleoresin extract of dried chrysanthemum flowers. Ketoalcoholic esters of chrystanthemic and pyrethroic acid account for the insecticidal properties of pyethrins. These acids are lipophilic and penetrate insects and paralyze their nervous system (Reigart, *et al.,* 1999). The insecticidal action of pyrethroid is widely known to be effective to a variety of insects in many major crops such as fruits, vegetables, cereals, maize, cotton, soybean, grapes and even on public and animal health sectors. The activity of pyrethroids are both contact and stomach action as a broad spectrum insecticides. Examples of synthetic pyrethroids are deltamethrin, lambda-cyhalothrin, fenvalerate, permethrin, cypermethrin, bifenthrin, esfenvalerate, etofenprox, cyfluthrin, fenpropathrin, allethrin, cyphenothrin, flucythrinate, flumethrin, imiprothrin, metofluthrin, prallethrin, resmethrin, silafluofen, sumithrin, tefluthrin, tetramethrin, tralomethrin and transluthrin.

Avermectin insecticides are isolated from fermentation of *Streptomyces avermitilis,* a naturally occurring soil Actinomycete. Abamectin acts by stimulating the release of y-aminobutyric acid, an inhibitory neurotransmitter, thus finally activating chloride channels. Examples of avermectins are abamectin and emamectin benzoate.

WO 2011/015220 discloses insecticidal compositions comprising for example cypermethrin, imidacloprid and abamectin.
Lu et al. ("Fipronil-containing insecticide composition with synergistic effect"; Qingdao Aodis Biological Technology Co. Ltd.; People's Republic of China,
July 15, 2009) discloses an insecticidal composition comprising imidacloprid, bifenthrin, emamectin benzoate and cyhalothrin.

Enhancements on insecticidal agents and compositions have been developed to improved control of insects and application practice to target crops as single or mixed pesticides. The judicious use of adopting strip application, spot application on areas with high insect incidence only and soil application to avoid direct contact with natural enemies and the use of selective and non-persistent agents increase environmental safety and lower incidence of insect resistance. In addition, the adoption of rotational application of insect control agents with different modes of action contributes to good insect management. Having an insecticidal composition with high synergistic action with no cross resistance to existing insecticide agents and with low environmental impact is desirable. Therefore, it would be advantageous to provide a composition which is potent to insect attack, with physico compatible formulations stable in during storage, safely pack and in ready-to-use formulation.

### SUMMARY OF THE INVENTION

The present invention relates to a synergistic insecticidal composition comprising three components (A), (B) and (C). Component (A) is imidacloprid, (B) is bifenthrin and (C) is abamectin. The present invention is also related to a method to control insect infestations in plants, plant parts and/or their surroundings by applying the synergistic insecticidal composition of the present invention on the plants, plant parts and/or their surroundings. Also disclosed is a process for making a synergistic insecticidal composition of the present invention. The present invention is further related to the use of the present synergistic insecticidal composition to prevent and/or treat insect infestations in plants, plant parts and/or their surroundings.

"Plant" as used herein, refers to all plant and plant populations such as desired and undesired wild plants or crop plants.

"Plant parts" as used herein, refers to all parts and organs of plants, such as shoot, leaves, needles, stalks, stems, fruit bodies, fruits, seeds, roots, tubers and rhizomes. Harvested materials, and vegetative and generative propagation materials, for example, cutting, tubers, meristem tissue, rhizomes, offsets, seeds, single and multiple plant cells and any other plant tissues, are also included.

The word "surrounding" or "locus thereof" refers to the place on which the plants are growing, the place on which the plant propagation materials of the plants are sown or the place on which the plant propagation materials of the plants will be sown.

"At least one" designates a number of the respective compounds of 1, 2, 3, 4, 5, 6, 7, 8, 9 or more, preferably 1, 2, or 3.

It has now surprisingly been found that when applying a insecticidal composition comprising the three components as detailed above on the plants, plant parts and/or surrounding, particularly on tomato, cotton, soybean and coffee, an excellent and synergistic performance in preventing and treating insect infestations may be observed. The synergistic insecticidal composition is highly effective for the protection of the aforementioned crops from the insect attack. The synergistic insecticidal composition is found to be highly active against a wide range of chewing, boring and sucking insects, *i.e.,* stink bug, mites, worm, thrips, whitefly, aphids, lepidopterous larvae, leaf miners, cutworms bollworm complex, boll weevil, rape weevil, saddle gall midge, soil insects, termites, etc. The present invention also demonstrates reduced application cost, increase crop yield and reduced environmental risk. It also delays the dominance of the resistant strains of insects, has a broader spectrum of activity and reduces risk of developing resistance.

Also disclosed is a process for preparing a synergistic insecticidal composition containing a neonicotinoid compound, a pyrethroid compound and an avermectin compound. The components (A), (B) and (C) may be applied in any desired sequence, any combination, consecutively or simultaneously.

The component (A) neonicotinoid insecticide may be present in the composition of the present invention in any suitable amount, and is generally present in an amount of from about 1% to about 50% by weight of the composition, preferably from about 1% to about 40% by weight of the composition, more preferably from about 1% to about 30% by weight of the composition, even more preferably from about 1% to about 20% by weight of the composition, even more preferred from about 5 to 15 % by weight of the composition, yet more preferred from about 8 to 12 % of the composition, also about 10 % by weight of the composition..

The component (A) neonicotinoid insecticide may be any insecticide active neonicotinoid compounds, for example with such compounds being known in the art and commercially available. The component (A) is imidacloprid.

The component (B) pyrethroid insecticide may be present in the composition in any suitable amount, and is generally present in an amount of from about 1% to about 30% by weight of the composition, preferably from about 1% to about 20% by weight of the composition, more preferably from about 1% to about 10% by weight of the composition, even more preferred from about 1 to 5 % by weight of the composition, or from about 2 to 4 % or about 3 % by weight of the composition.

The component (B) pyrethroid insecticide is bifenthrin.

The component (C) avermectin insecticide may be present in the composition in any suitable amount, and is generally present in an amount of from about 0.2% to about 30% by weight of the composition, preferably from about 0.2% to about 20% by weight of the composition, more preferably from about 0.2% to about 10% by weight of the composition, most preferably from about 0.2% to about 1% or less than 1%, such as 0.9 %, or 0.8 % or 0.75 % or even 0.72 % by weight of the composition.

The component (C) avermectin insecticide is abamectin.

The components (A) (B) and (C) may be present in the composition or applied in any amounts relative to each other, to provide the enhanced or synergistic effect of the mixture. In particular, the weight ratio of the components (A) and (B) in the composition independently is preferably in the range of from about 15:1 to about 1:15, more preferably from about 10:1 to about 1:10, or about 10:3 to about 3:10 or about 5:1 to about 1:5. In some embodiments, the weight ratio of the components (A) to (B) in the composition is about 10:4 to about 10:2, preferably about 10:3. In particular, the weight ratio of the components (B) and (C) in the composition independently is preferably in the range of from about 20:1 to about 1:20, more preferably from about 15:1 to about 1:15 or about 10:1 to about 1:10, most preferably from about 5:1 to about 1:5. In some embodiments, the weight ratio of the components (B) to (C) in the composition is from about 10:4 to 10: 1, preferably from about 10:3 to about 10:2, more preferably about 10 : 2.5 and most preferred about 10 : 2.4.. In particular, the weight ratio of the components (A), (B) and (C) in the composition independently is preferably in the range of from about 25:5:1 to about 1:5:25, more preferably from about 20:5:1 to about 1:5:20, about 15:5:1 to about 1:5:15 or about 14:4:1 to about 1:4:14.

The components (A), (B) and (C) together may be present in the composition in any suitable amount, and is generally present in an amount of from about 1% to about 70% by weight of the composition, preferably from about 1% to about 40% by weight of the composition, more preferably from about 1% to about 20% by weight of the composition.

In a preferred embodiment of the invention, each combination is a composition comprising components (A), (B) and (C), and optionally one or more auxiliaries. The auxiliaries employed in the composition will depend upon the type of formulation and/or the manner in which the formulation is to be applied by the end user. Formulations incorporating the composition of the present invention are described hereinafter. Suitable auxiliaries which may be comprised in the composition according to the invention are all customary formulation adjuvants or components, such as extender, carriers, solvents, surfactants, stabilizers, anti-foaming agents, anti-freezing agents, preservatives, antioxidants, colorants, thickeners, solid adherents and inert fillers. Such auxiliaries are known in the art and are commercially available. Their use in the formulation of the compositions of the present invention will be apparent to the person skilled in the art.

The insecticidal composition may further comprise one or more inert fillers. Such inert fillers are known in the art and available commercially. Suitable fillers in a form of a solid include, for example, natural ground minerals, such as kaolins, aluminas, talc, chalk, quartz, attapulgite, montmorillonite, and diatomaceous earth, or synthetic ground minerals, such as highly dispersed silicic acid, aluminum oxide, silicates, and calcium phosphates and calcium hydrogen phosphates. Suitable inert fillers for granules include, for example, crushed and fractionated natural minerals, such as calcite, marble, pumice, sepiolite, and dolomite, or synthetic granules of inorganic and organic ground materials, as well as granules of organic material, such as sawdust, coconut husks, corn cobs, and tobacco stalks.

The insecticidal composition optionally includes one or more surfactants which are preferably non-ionic, cationic and/or anionic in nature and surfactant mixtures which have good emulsifying, dispersing and wetting properties, depending on the nature of the active compound to be formulated. Suitable surfactants are known in the art and are commercially available. Suitable anionic surfactants can be both so-called water-soluble soaps and water-soluble synthetic surface-active compounds. Soaps which may be used are the alkali metal, alkaline earth metal or substituted or unsubstituted ammonium salts of higher fatty acid (C₁₀-C₂₂), for example the sodium or potassium salt of oleic or stearic acid, or of natural fatty acid mixtures. The surfactant can be an emulsifier, dispersant or wetting agent of ionic or nonionic type. Examples which may be used are salts of polyacrylic acids, salts of lignosulphonic acid, salts of phenylsulphonic or naphthalenesulphonic acids, polycondensates of ethylene oxide with fatty alcohols or with fatty acids or with fatty amines, substituted phenols, especially alkylphenols, sulphosuccinic ester salts, taurine derivatives, especially alkyltaurates, or phosphoric esters of polyethoxylated phenols or alcohols. The presence of at least one surfactant is generally required when the active compound and/or the inert carrier and/or auxiliary/adjuvant are insoluble in water and the vehicle for the final application of the composition is water.

The insecticidal composition optionally further comprises one or more polymeric stabilizer. The suitable polymeric stabilizers that may be used in the present invention include, but are not limited to, polypropylene, polyisobutylene, polyisoprene, copolymers of monoolefins and diolefins, polyacrylates, polystyrene, polyvinyl acetate, polyurethanes or polyamides. Suitable stabilizers are known in the art and commercially available.

The surfactants and polymeric stabilizers mentioned above are generally believed to impart stability to the composition, in turn allowing the composition to be formulated, stored, transported and applied.

Suitable anti-foams include all substances which can normally be used for this purpose in agrochemical compositions. Suitable anti-foam agents are known in the art and are available commercially. Particularly preferred antifoam agents are mixtures of polydimethylsiloxanes and perfluroalkylphosphonic acids, such as the silicone anti-foam agents available from GE or Compton.

Suitable organic solvents are selected from all customary organic solvents which thoroughly dissolve the active compounds employed. Again, suitable organic solvents for the active components (A) and (B) are known in the art. The following may be mentioned as being preferred: N-methyl pyrrolidone, N-octyl pyrrolidone, cyclohexyl-1-pyrrolidone; or SOLVESSO™200, a mixture of paraffinic, isoparaffinic, cycloparaffinic and aromatic hydrocarbons. Suitable solvents are commercially available.

Suitable preservatives include all substances which can normally be used for this purpose in agrochemical compositions of this type and again are well known in the art. Suitable examples that may be mentioned include PREVENTOL® (from Bayer AG) and PROXEL® (from Bayer AG).

Suitable antioxidants are all substances which can normally be used for this purpose in agrochemical compositions, as is known in the art. Preference is given to butylated hydroxytoluene.

Suitable thickeners include all substances which can normally be used for this purpose in agrochemical compositions. For example xanthan gum, PVOH, cellulose and its derivatives, clay hydrated silicates, magnesium aluminum silicates or a mixture thereof. Again, such thickeners are known in the art and available commercially.

The insecticidal composition may further comprise one or more solid adherents. Such adherents are known in the art and available commercially. They include organic adhesives, including tackifiers, such as celluloses of substituted celluloses, natural and synthetic polymers in the form of powders, granules, or lattices, and inorganic adhesives such as gypsum, silica or cement.

In addition, depending upon the formulation, the composition according to the invention may also comprise water.

The insecticidal composition according to the present invention comprises components (A) imidacloprid, (B) bifenthrin and (C) abamectin.

The composition of the present invention can be used in the agricultural sector and related fields of use for control of insects for example, but not limited to:
*Acanthoscelides obtectus, Aculops lycopersici, Agrotis ipsilon, Alabama argillacea, Anthonomus grandis, Anticarsia gemmatalis, Aphis craccivora, Aphis gossypii, Bemisia tabaci raça B, Bemisia tabaci, Brevicoryne brassicae, Brevipalpus phoenicis, Caaliothrips phaseoli, Caliothrips bicinctus, Caliothrips phaseoli, Chrysomphalus ficus, Cinara atlantica, Coccus viridis, Cornitermes bequaerti, Dactylopius opuntiae, Dactynotus sonchi, Dalbulus maidis, Deois flavopicta, Diabrotica speciosa, Diaphorina citri, Dichelops furcatus, Dichelops melacanthus, Diloboderus abderus, Ditylenchus dipsaci, Dysmicoccus brevipes, Ecdytolopha aurantiana, Elasmopalpus lignosellus, Empoasca kraemeri, Empoasca spp., Enneothrips flavens, Epitrix fasciata, Euetheola humilis, Euschistus heros, Faustinus cubae, Frankliniella schultzei, Frankliniella williamsi, Heterotermes tenuis, Horcias nobilellus, Julus Hesperus, Leucoptera coffeella, Lyriomyza huidobrensis, Lyriomyza sativae, Lyriomyza trifolii, Mahanarva fimbriolata, Meloidogyne incognita, Meloidogyne javanica, Metopolophium dirhodum, Migdolus fryanus, Myzus persicae, Neocapritermes opacus, Neoleucinodes elegantalis, Nezara viridula, Oligonychus ilicis, Oncometopia facialis, Orthezia praelonga, Oryzophagus oryzae, Panonychus citri, Panonychus ulmi, Phthorimaea operculella, Phyllocnistis citrella, Phyllocoptruta oleivora, Phyllophaga cuyabana, Piezodorus guildinii, Pinnaspis aspidistrae, Polyphagotarsonemus latus, Pratylenchus brachyurus, Procornitermes triacifer, Pseudaletia sequax, Rhizopertha dominica, Rhopalosiphum graminum, Rhopalosiphum maidis, Rotylenchulus reniformis, Selenaspidus articulates, Selenothrips rubrocinctus, Sitophilus zeamais, sphenophorus levis, Spodoptera frugiperda, Steneotarsonemus pallidus, Syntermes molestus, Tetranychus ludeni, Tetranychus urticae, Thrips palmi, Thrips tabaci, Toxoptera citricida, Tuta absoluta* and so on.

Particularly, each composition of the present invention can be used in the agricultural sector and related fields of use for control of insects for example, but not limited to: *Alabama argillacea, Anthonomus grandis, Aphis gossypii, Bemisia tabaci raça B, Caaliothrips phaseoli, Frankliniella schultzei, Horcias nobilellus, Meloidogyne incognita, Nezara viridula, Polyphagotarsonemus latus, Pratylenchus brachyurus, Rotylenchulus reniformis, Spodoptera frugiperda, Syntermes molestus, Tetranychus ludeni, Tetranychus urticae* on cotton;
*Anticarsia gemmatalis, Bemisia tabaci raça B, Caaliothrips phaseoli, Diabrotica speciosa, Elasmopalpus lignosellus, Euschistus heros, Frankliniella schultzei, Julus Hesperus, Meloidogyne incognita, Nezara viridula, Phyllophaga cuyabana, Piezodorus guildinii, Pratylenchus brachyurus, Tetranychus ludeni, Tetranychus urticae* on soybean;
*Brevipalpus phoenicis, Leucoptera coffeella, Oligonychus ilicis* on coffee; and
*Aculops lycopersici, Bemisia tabaci raça B, Bemisia tabaci, Frankliniella schultzei, Lyriomyza huidobrensis, Lyriomyza trifolii, Myzus persicae, Myzus persicae, Neoleucinodes elegantalis, Phthorimaea operculella, Tetranychus urticae, Thrips palmi, Tuta absoluta* on tomato.

More particularly, each composition of the present invention can be used to control:
- *Nezara viridula* (Southern green stink bug), Tetranychus spp (mite), Anticarsia gemmatalis (worm), thrips (Caaliothrips phaseoli), *Bemisia tabaci raça B (whitefly)* on soybean;
- *Nezara viridula* (Southern green stink bug), Tetranychus spp (mite), Anticarsia gemmatalis (worm), thrips (Caaliothrips phaseoli), *Bemisia tabaci raça B (whitefly)* on cotton;
- Brevipalpus phoenicis, Leucoptera coffeella, Oligonychus ilicis on coffee; and
- Bemisia tabaci raça B (whitefly), Bemisia tabaci (whitefly), Tetranychus urticae (red spider mite), Thrips palmi (thrip) on tomato.

The composition in the present invention exhibits surprisingly high effectiveness in controlling insect infestations especially those caused by on stink bug, mites, worm, thrips and whitefly.

The composition according to the present invention is suitable for plants of the crops: cereals (wheat, barley, rye, oats, maize, rice, sorghum, triticale and related crops); fruit, such as pomes, stone fruit and soft fruit, such as apples, grapes, pears, plums, peaches, almonds, cherries, and berries, for example strawberries, raspberries and blackberries; leguminous plants (beans, lentils, peas, soybeans); oil plants (rape, mustard, sunflowers); cucurbitaceae (marrows, cucumbers, melons); fiber plants (cotton, flax, hemp, jute); citrus, such as oranges, lemons, grapefruit and mandarins; vegetables (spinach, lettuce, asparagus, cabbages, carrots, onions, tomatoes, potatoes, paprika); coffee; as well as ornamentals (flowers, such as rose, shrubs, broad-leaved trees and evergreens, such as conifers).

The composition of the present invention can be applied on fiber plants, leguminous plants, coffee and vegetables, or on cotton, soybean, coffee and tomato.

The composition synergistic insecticidal comprising components (A), (B) and (C) is particularly effective in controlling of stink bug, mites, worm, thrips and whitefly present in cotton, soybean, coffee and tomato, their plant parts and/or surrounding.

The composition synergistic insecticidal comprising components (A), (B) and (C) is particularly effective in controlling of stink bug, mites, worm, thrips and whitefly present in fiber plants and leguminous plants, their plant parts and/or surrounding.

It is particularly effective in controlling *Nezara viridula* (Southern green stink bug), *Tetranychus spp* (mite), *Anticarsia gemmatalis* (worm) and/or *Caaliothrips phaseoli* (thrips), *Bemisia tabaci raça B (whitefly)* present in soybean and/or cotton, their plant parts and/or surrounding by applying a synergistic insecticidal composition comprising components (A) imidacloprid, (B) bifenthrin and (C) abamectin, wherein the weight ratio of the components (A), (B) and (C) in the composition is 100:30:7.2.

It is particularly effective in controlling *Nezara viridula* (Southern green stink bug). *Tetranychus spp* (mite), *Anticarsia gemmatalis* (worm) and/or *Caaliothrips phaseoli* (thrips), *Bemisia tabaci raça B (whitefly)* present in soybean and/or cotton, their plant parts and/or surrounding by applying a synergistic insecticidal composition comprising components (A) imidacloprid, (B) bifenthrin and (C) abamectin, wherein the weight of the component (A) is 10% by weight of the composition, wherein the component (B) is 3% by weight of the composition; and wherein the component (C) is 0.72% by weight of the composition.

It is particularly effective in controlling *Nezara viridula* (Southern green stink bug), *Tetranychus spp* (mite), *Anticarsia gemmatalis* (worm) and/or *Caaliothrips phaseoli* (thrips), *Bemisia tabaci raça B (whitefly)* present in soybean and/or cotton, their plant parts and/or surrounding by applying a synergistic insecticidal composition comprising components:
(A) imidacloprid, (B) bifenthrin and (C) abamectin,
wherein the weight of the component (A) is about 10% by weight of the composition, wherein the component (B) is about 3% by weight of the composition; and wherein the component (C) is about 0.72% by weight of the composition.

Each of the compositions can be applied to the foliage or fruit of the plant or surroundings.

The composition of the present invention may contain or be mixed with other pesticides, such as other fungicides, insecticides and nematicides, growth factors and fertilizers.

The rates of application (use) of the composition of the present invention may vary, for example, according to type of use, type of crop, the specific active compounds in the combination, type of plants, but is such that the active compounds in the combination in an effective amount to provide the desired action (such as insects or pest control). The application rate of the composition for a given set of conditions can readily be determined by trials.

The components (A), (B) and (C), and any other pesticides, may be applied and used in pure form, as a solid active compound, for example, in a specific particle size, or preferably together with at least one of the auxiliary or adjuvant components, as is customary in formulation technology, such as extenders, for example solvents or solid carriers, or surface-active compounds (surfactants), as described in more detail above. Generally, the components (A), (B) and (C) are in the form of a formulation composition with one or more of the aforementioned customary formulation auxiliaries.

Examples of formulation types for pre-mix compositions are:
a water-soluble concentrate (SL), an emulstifiable concentrate (EC), an emulsion (EW), a micro-emulsion (ME), an oil-based suspension concentrate (OD), a flowable suspension (FS), a water-dispersible granule (WG), a water-soluble granule (SG), a water-dispersible powder (WP), a water soluble powder (SP), a granule (GR), an encapsulated granule (CG), a fine granule (FG), a macrogranule (GG), an aqueous suspo-emulsion (SE), a microencapsulated suspension (CS), a microgranule (MG) or preferably a suspension concentrate (SC).

Using such formulations, either straight (that is undiluted) or diluted with a suitable solvent, especially water, plants, plant parts and/or the surrounding can be treated and protected against insects by spraying, pouring or immersing. Generally, formulation can be diluted with water having the rate of from about 1 to about 300 g total active ingredients per hectare, preferably from about 20 to about 200 g total active ingredients per hectare, most preferably from about 30 to about 125 g total active ingredients per hectare. The application rate of the component (A) is ranged from about 1 to about 200 g a.i. per hectare, more preferably from about 1 to about 150 g a.i. per hectare, most preferably from about 20 to about 100 g a.i. per hectare. The application rate of the component (B) is ranged from about 1 to about 50 g a.i. per hectare, more preferably from about 5 to about 20 g a.i. per hectare, most preferably from about 10 to about 20 g a.i. per hectare. The application rate of the component (C) is ranged from about 1 to about 20 g a.i. per hectare, more preferably from about 1 to about 10 g a.i. per hectare, most preferably from about 1 to about 5 g a.i. per hectare.

The composition can be applied with the methods known in the art. These methods include coating, spraying, dipping, soaking, injection, irrigation etc.

The active components (A), (B) and (C) can be applied to the plants, plant parts and/or surrounding where control is desired either simultaneously or in succession at short intervals, for example on the same day. The components (A), (B) and (C) may be applied to the plant, one or more parts thereof (such as leaves or seeds), or surrounding in any order. Each component may be applied just once or a plurality of times. Preferably, each of the components (A), (B) and (C) are applied a plurality of times, in particular from 2 to 5 times, more preferably 2-3 times.

The active components (A), (B) and (C) may be applied in any suitable form, as described above. Typically, the active components will be applied as formulations, that is compositions comprising one or more of the active components together with further carriers, surfactants or other application-promoting adjuvants customarily employed in formulation technology.

In the event components (A), (B) and (C) are applied simultaneously in the present invention, they may be applied as a composition containing components (A), (B) and (C), in which case components (A), (B) and (C) can be obtained from a separate formulation source and mixed together (known as a tank-mix, ready-to-apply, spray broth, or slurry), optionally with other pesticides, or components (A), (B) and (C) can be obtained as a single formulation mixture source (known as a pre-mix, concentrate, formulated compound (or product)), and optionally mixed together with other pesticides.

The compositions according to the invention are distinguished by the fact that they are especially well tolerated by plants and are environmentally friendly.

Each composition according to the invention is especially advantageous for the treatment of plants.

The following examples are given by way of illustration and not by way of limitation of the invention.

### FORMULATION EXAMPLES

### Example 1

An aqueous suspension concentrate (SC) was prepared having the following composition:

| | |
|---|---|
| Imidacloprid | 100g |
| Bifenthrin | 30g |
| Abamectin | 7.2g |
| Propylene glycol | 100g |
| Tristyrylphenol ethoxylates | 10g |
| Sodium lignosulfonate | 20g |
| Carboxymethylcellulose | 20g |
| Silicone oil (in the form of a 75% emulsion in water) | 10g |
| Xanthan gum | 2g |
| NIPACIDE BIT 20 | 2g |
| Water | Balance to 1L |

The finely ground imidacloprid, bifenthrin and abamectin were intimately mixed with the adjuvants, giving a suspension concentrate from which suspensions of any desired dilution could be obtained by dilution with water.

### Example 2 (not forming part of the invention)

An aqueous suspension concentrate (SC) was prepared having the following composition:

| | |
|---|---|
| Imidacloprid | 200g |
| Cypermethrin | 40g |
| Abamectin | 8g |
| Propylene glycol | 100g |
| Tristyrylphenol ethoxylates | 50g |
| Sodium lignosulfonate | 10g |
| Carboxymethylcellulose | 10g |
| Silicone oil (in the form of a 75% emulsion in water) | 10g |
| Xanthan gum | 2g |
| NIPACIDE BIT 20 | 2g |
| Water | Balance to 1L |

The finely ground imidacloprid, cypermethrin and abamectin were intimately mixed with the auxiliaries, giving a suspension concentrate from which suspensions of any desired dilution could be obtained by dilution with water.

### Example 3 (not forming part of the invention)

An aqueous suspension concentrate (SC) was prepared having the following composition:

| | |
|---|---|
| Imidacloprid | 300g |
| Lambda-cyhalothrin | 30g |
| Abamectin | 6g |
| Propylene glycol | 100g |
| Tristyrylphenol ethoxylates | 50g |
| Sodium lignosulfonate | 10g |
| Carboxymethylcellulose | 10g |
| Silicone oil (in the form of a 75% emulsion in water) | 10g |
| Xanthan gum | 1g |
| NIPACIDE BIT 20 | 1g |
| Water | Balance to 1L |

The finely ground imidacloprid, lambda-cyhalothrin and abamectin were intimately mixed with the auxiliaries, giving a suspension concentrate from which suspensions of any desired dilution could be obtained by dilution with water.

### Example 4

An emulsifiable concentrate (EC) was prepared having the following composition:

| | |
|---|---|
| Imidacloprid | 100g |
| Bifenthrin | 30g |
| Abamectin | 7.2g |
| Tristyrylphenol ethoxylates | 50g |
| | |
| Silicone oil | 1g |
| N-methylpyrrolidone | 300g |
| SOLVESSO™200 | Balance to 1L |

### Example 5 (not forming part of the invention)

A suspo-emulsion (SE) was prepared having the following composition:

| | |
|---|---|
| Imidacloprid | 300g |
| Bifenthrin | 100g |
| Emamectin benzoate | 50g |
| SOLVESSO™200 | 150g |
| Alkamuls OR/36 | 45g |
| | |
| TERSPERSE®2500 | 37.5g |
| SOPROPHOR®FLK | 15g |
| Propylene glycol | 100g |
| 2% xanthan gum | 112.5g |
| NIPACIDE BIT 20 | 2.5g |
| Silicone oil (in the form of a 75% emulsion in water) | 15g |
| Water | Balance to 1L |

Bifenthrin were mixed with SOLVESSO™200 and the emulsifiers OR/36 to get an oil phase. The finely ground Imidacloprid and Emamectin benzoate was intimately mixed with the other auxiliaries (including water), giving a water phase.

### Example 6 (not forming part of the invention)

A water-dispersible powder (WDG) was prepared having the following composition:

| | |
|---|---|
| Imidacloprid | 100g |
| Bifenthrin | 150g |
| Emamectin benzoate | 10g |
| Dispersogen 1494 (sodium salt of a cresol-formaldehyde condensation) | 50 g |
| | |
| Kaolin | Balance to 1000 g |

### Example 7

An aqueous suspension concentrate (SC) was prepared having the following composition:

| | |
|---|---|
| Imidacloprid | 200g |

| | |
|---|---|
| Bifenthrin | 40g |
| Abamectin | 2g |
| Propylene glycol | 100g |
| Tristyrylphenol ethoxylates | 10g |
| Sodium lignosulfonate | 20g |
| Carboxymethylcellulose | 20g |
| Silicone oil (in the form of a 75% emulsion in water) | 10g |
| Xanthan gum | 2g |
| NIPACIDE BIT 20 | 2g |
| Water | Balance to 1L |

The finely ground imidacloprid, abamectin and bifenthrin were intimately mixed with the adjuvants, giving a suspension concentrate from which suspensions of any desired dilution could be obtained by dilution with water.

### Example 8

An aqueous suspension concentrate (SC) was prepared having the following composition:

| | |
|---|---|
| Imidacloprid | 300g |
| Bifenthrin | 75g |
| Abamectin | 30g |
| Propylene glycol | 100g |
| Tristyrylphenol ethoxylates | 10g |
| Sodium lignosulfonate | 20g |
| Carboxymethylcellulose | 20g |
| Silicone oil (in the form of a 75% emulsion in water) | 10g |
| Xanthan gum | 1g |
| NIPACIDE BIT 20 | 1g |
| Water | Balance to 1L |

The finely ground imidacloprid, abamectin and bifenthrin were intimately mixed with the adjuvants, giving a suspension concentrate from which suspensions of any desired dilution could be obtained by dilution with water.

### Biological Examples

### Field Test 1 - Soybean - Bemisia tabaci raça B (whitefly)

*Bemisia tabaci raça B* was reared in the laboratory. The number of insect were counted, collected and then put on healthy young soybean plants. The Formulations Examples were diluted and then sprayed on the plants. After staying in a greenhouse at 21-25 °C and 80 % relative atmospheric humidity for 10 days, the remaining population was examined.

| **Test** | **Component A (g/ha)** | + | **Component B (g/ha)** | **+** | **Component C (g/ha)** | **Whitefly population** |
|---|---|---|---|---|---|---|
| Untreated | 0 | + | 0 | + | 0 | 90% |
| Example 1 | 40 | + | 12 | + | 2.88 | 0% |
| Example 2 | 80 | + | 16 | + | 3.2 | 5% |
| Example 3 | 120 | + | 12 | + | 2.4 | 5% |
| Example 4 | 40 | + | 12 | + | 2.88 | 5% |
| Example 5 | 120 | + | 40 | + | 20 | 10% |
| Example 6 | 40 | + | 60 | + | 4 | 5% |
| Example 7 | 80 | + | 16 | + | 0.8 | 5% |
| Example 8 | 40 | + | 12 | + | 12 | 15% |
| Imidacloprid | 120 | + | 0 | + | 0 | 65% |
| Bifenthrin | 0 | + | 40 | + | 0 | 75% |
| Cypermethrin | 0 | + | 60 | + | 0 | 65% |
| Lambda-cyhalothrin | 0 | | 16 | | 0 | 75% |
| Abamectin | 0 | | 0 | | 12 | 75% |
| Emamectin benzoate | 0 | | 0 | | 20 | 70% |

### Field Test 2 - Soybean - Tetranychus urticae (mites)

*Tetranychus urticae* was reared in the laboratory. The number of insect were counted, collected and then put on healthy young soybean plants. The Formulations Examples were diluted and then sprayed on the plants. After staying in a greenhouse at 21-25 °C and 80 % relative atmospheric humidity for 10 days, the remaining population was examined.

| **Test** | **Component A (g/ha)** | + | **Component B (g/ha)** | **+** | **Component C (g/ha)** | **Tetranychus urticae population** |
|---|---|---|---|---|---|---|
| Untreated | 0 | + | 0 | + | 0 | 85% |
| Example 1 | 40 | + | 12 | + | 2.88 | 0% |
| Example 2 | 80 | + | 16 | + | 3.2 | 0% |
| Example 3 | 120 | + | 12 | + | 2.4 | 5% |
| Example 4 | 40 | + | 12 | + | 2.88 | 5% |
| Example 5 | 120 | + | 40 | + | 20 | 5% |
| Example 6 | 40 | + | 60 | + | 4 | 5% |
| Example 7 | 80 | + | 16 | + | 0.8 | 5% |
| Example 8 | 40 | + | 12 | + | 12 | 10% |
| Imidacloprid | 120 | + | 0 | + | 0 | 70% |
| Bifenthrin | 0 | + | 40 | + | 0 | 70% |
| Cypermethrin | 0 | + | 60 | + | 0 | 75% |
| Lambda-cyhalothrin | 0 | | 16 | | 0 | 70% |
| Abamectin | 0 | | 0 | | 12 | 65% |
| Emamectin benzoate | 0 | | 0 | | 20 | 60% |

### Field Test 3 - Soybean - Anticarsia gemmatalis (Worm)

*Anticarsia gemmatalis* was reared in the laboratory. The number of insect were counted, collected and then put on healthy young soybean plants. The Formulations Examples were diluted and then sprayed on the plants. After staying in a greenhouse at 21-25 °C and 80 % relative atmospheric humidity for 10 days, the remaining population was examined.

| **Test** | **Component A (g/ha)** | + | **Component B (g/ha)** | + | **Component C (g/ha)** | **Anticarsia gemmatalis population** |
|---|---|---|---|---|---|---|
| Untreated | 0 | + | 0 | + | 0 | 90% |
| Example 1 | 50 | + | 15 | + | 3.6 | 5% |
| Example 2 | 100 | + | 20 | + | 4 | 5 % |
| Example 3 | 150 | + | 15 | + | 3 | 5% |
| Example 4 | 50 | + | 15 | + | 3.6 | 5% |
| Example 5 | 150 | + | 50 | + | 0 | 10% |
| Example 6 | 50 | + | 75 | + | 0 | 5% |
| Example 7 | 100 | + | 20 | + | 1 | 5% |
| Example 8 | 50 | + | 15 | + | 15 | 15% |
| Imidacloprid | 150 | + | 0 | + | 0 | 70% |
| Bifenthrin | 0 | + | 50 | + | 0 | 60% |
| Cypermethrin | 0 | + | 75 | + | 0 | 60% |
| Lambda-cyhalothrin | 0 | | 20 | | 0 | 65% |
| Abamectin | 0 | | 0 | | 15 | 70% |
| Emamectin benzoate | 0 | | 0 | | 25 | 65% |

### Field Test 4 - Cotton - Tetranychus urticae (mites)

*Tetranychus urticae* was reared in the laboratory. The number of insect were counted, collected and then put on healthy young cotton plants. The Formulations Examples were diluted and then sprayed on the plants. After staying in a greenhouse at 21-25 °C and 80 % relative atmospheric humidity for 10 days, the remaining population was examined.

| **Test** | **Component A (g/ha)** | **+** | **Component B (g/ha)** | **+** | **Component C (g/ha)** | **Tetranychus urticae population** |
|---|---|---|---|---|---|---|
| Untreated | 0 | + | 0 | + | 0 | 85% |
| Example 1 | 40 | + | 12 | + | 2.88 | 0% |
| Example 2 | 80 | + | 16 | + | 3.2 | 5% |
| Example 3 | 120 | + | 12 | + | 2.4 | 5% |
| Example 4 | 40 | + | 12 | + | 2.88 | 5% |
| Example 5 | 120 | + | 40 | + | 20 | 5% |
| Example 6 | 40 | + | 60 | + | 4 | 5% |
| Example 7 | 80 | + | 16 | + | 0.8 | 5% |
| Example 8 | 40 | + | 12 | + | 12 | 10% |
| Imidacloprid | 120 | + | 0 | + | 0 | 70% |
| Bifenthrin | 0 | + | 40 | + | 0 | 70% |
| Cypermethrin | 0 | + | 60 | + | 0 | 70% |
| Lambda-cyhalothrin | 0 | | 16 | | 0 | 70% |
| Abamectin | 0 | | 0 | | 12 | 55% |
| Emamectin benzoate | 0 | | 0 | | 20 | 60% |

### Field Test 5 - Cotton - Nezara viridula (bug)

*Nezara viridula* was reared in the laboratory. The number of insect were counted, collected and then put on healthy young cotton plants. The Formulations Examples were diluted and then sprayed on the plants. After staying in a greenhouse at 21-25 °C and 80 % relative atmospheric humidity for 10 days, the remaining population was examined.

| **Test** | **Component A (g/ha)** | + | **Component B (g/ha)** | + | **Component C (g/ha)** | **Nezara viridula population** |
|---|---|---|---|---|---|---|
| Untreated | 0 | + | 0 | + | 0 | 90% |
| Example 1 | 50 | + | 15 | + | 3.6 | 5% |
| Example 2 | 100 | + | 20 | + | 4 | 5% |
| Example 3 | 150 | + | 15 | + | 3 | 5% |

| | | | | | | |
|---|---|---|---|---|---|---|
| Example 4 | 50 | + | 15 | + | 3.6 | 5% |
| Example 5 | 150 | + | 50 | + | 0 | 5% |
| Example 6 | 50 | + | 75 | + | 0 | 5% |
| Example 7 | 100 | + | 20 | + | 1 | 5% |
| Example 8 | 50 | + | 15 | + | 15 | 10% |
| Imidacloprid | 150 | + | 0 | + | 0 | 70% |
| Bifenthrin | 0 | + | 50 | + | 0 | 60% |
| Cypermethrin | 0 | + | 75 | + | 0 | 60% |
| Lambda-cyhalothrin | 0 | | 20 | | 0 | 65% |
| Abamecti n | 0 | | 0 | | 15 | 70% |
| Emamectin benzoate | 0 | | 0 | | 25 | 65% |

### Field Test 6 - Cotton - Tetranychus ludeni (mites)

*Tetranychus ludeni* was reared in the laboratory. The number of insect were counted, collected and then put on healthy young cotton plants. The Formulations Examples were diluted and then sprayed on the plants. After staying in a greenhouse at 21-25 °C and 80 % relative atmospheric humidity for 10 days, the remaining population was examined.

| **Test** | **Component A (g/ha)** | **+** | **Component B (g/ha)** | **+** | **Component C (g/ha)** | **Tetranychus ludeni population** |
|---|---|---|---|---|---|---|
| Untreated | 0 | + | 0 | + | 0 | 80% |
| Example 1 | 40 | + | 12 | + | 2.88 | 0% |
| Example 2 | 80 | + | 16 | + | 3.2 | 5% |
| Example 3 | 120 | + | 12 | + | 2.4 | 5% |
| Example 4 | 40 | + | 12 | + | 2.88 | 0% |
| Example 5 | 120 | + | 40 | + | 20 | 5% |
| Example 6 | 40 | + | 60 | + | 4 | 5% |
| Example 7 | 80 | + | 16 | + | 0.8 | 5% |
| Example 8 | 40 | + | 12 | + | 12 | 10% |
| Imidacloprid | 120 | + | 0 | + | 0 | 65% |
| Bifenthrin | 0 | + | 40 | + | 0 | 65% |
| Cypermethrin | 0 | + | 60 | + | 0 | 65% |
| Lambda-cyhalothrin | 0 | | 16 | | 0 | 60% |
| Abamectin | 0 | | 0 | | 12 | 55% |
| Emamectin benzoate | 0 | | 0 | | 20 | 55% |

### Field Test 7 - Cotton - Caliothrips phaseoli (thrips)

*Caliothrips phaseoli* was reared in the laboratory. The number of insect were counted, collected and then put on healthy young cotton plants. The Formulations Examples were diluted and then sprayed on the plants. After staying in a greenhouse at 21-25 °C and 80 % relative atmospheric humidity for 10 days, the remaining population was examined.

| **Test** | **Component A (g/ha)** | **+** | **Component B (g/ha)** | **+** | **Component C (g/ha)** | **Caliothrips phaesoli population** |
|---|---|---|---|---|---|---|
| Untreated | 0 | + | 0 | + | 0 | 90% |
| Example 1 | 60 | + | 18 | + | 4.32 | 5% |
| Example 2 | 120 | + | 24 | + | 4.8 | 5% |
| Example 3 | 180 | + | 18 | + | 3.6 | 5% |
| Example 4 | 60 | + | 18 | + | 4.32 | 5% |
| Example 5 | 180 | + | 60 | + | 0 | 5% |
| Example 6 | 60 | + | 90 | + | 0 | 5% |
| Example 7 | 120 | + | 24 | + | 1.2 | 5% |
| Example 8 | 60 | + | 18 | + | 18 | 10% |
| Imidacloprid | 180 | + | 0 | + | 0 | 65% |
| Bifenthrin | 0 | + | 60 | + | 0 | 70% |
| Cypermethrin | 0 | + | 90 | + | 0 | 65% |
| Lambda-cyhalothrin | 0 | | 24 | | 0 | 60% |
| Abamectin | 0 | | 0 | | 18 | 65% |
| Emamectin benzoate | 0 | | 0 | | 30 | 65% |

### Field Test 8 - Coffee - Leucoptera coffeella (leafminer)

*Leucoptera coffeella* was reared in the laboratory. The number of insect were counted, collected and then put on healthy young coffee plants. The Formulations Examples were diluted and then sprayed on the plants. After staying in a greenhouse at 21-25 °C and 80 % relative atmospheric humidity for 10 days, the remaining population was examined.

| **Test** | **Component A (g/ha)** | **+** | **Component B (g/ha)** | **+** | **Component C (g/ha)** | **Leucoptera coffeella population** |
|---|---|---|---|---|---|---|
| Untreated | 0 | + | 0 | + | 0 | 85% |
| Example 1 | 60 | + | 18 | + | 4.32 | 0% |
| Example 2 | 120 | + | 24 | + | 4.8 | 0% |
| Example 3 | 180 | + | 18 | + | 3.6 | 5% |
| Example 4 | 60 | + | 18 | + | 4.32 | 0% |
| Example 5 | 180 | + | 60 | + | 0 | 5% |
| Example 6 | 60 | + | 90 | + | 0 | 5% |
| Example 7 | 120 | + | 24 | + | 1.2 | 5% |
| Example 8 | 60 | + | 18 | + | 18 | 10% |
| Imidacloprid | 180 | + | 0 | + | 0 | 75% |
| Bifenthrin | 0 | + | 60 | + | 0 | 65% |
| Cypermethrin | 0 | + | 90 | + | 0 | 60% |
| Lambda-cyhalothrin | 0 | | 24 | | 0 | 60% |
| Abamectin | 0 | | 0 | | 18 | 65% |
| Emamectin benzoate | 0 | | 0 | | 30 | 60% |

### Field Test 9 - Tomato - Bemisia tabaci raça B (whitefly)

*Bemisia tabaci raça B* was reared in the laboratory. The number of insect were counted, collected and then put on healthy young tomato plants. The Formulations Examples were diluted and then sprayed on the plants. After staying in a greenhouse at 21-25 °C and 80 % relative atmospheric humidity for 10 days, the remaining population was examined.

| **Test** | **Component A (g/ha)** | **+** | **Component B (g/ha)** | **+** | **Component C (g/ha)** | **Whitefly population** |
|---|---|---|---|---|---|---|
| Untreated | 0 | + | 0 | + | 0 | 85% |
| Example 1 | 40 | + | 12 | + | 2.88 | 0% |
| Example 2 | 80 | + | 16 | + | 3.2 | 0% |
| Example 3 | 120 | + | 12 | + | 2.4 | 5% |
| Example 4 | 40 | + | 12 | + | 2.88 | 5% |
| Example 5 | 120 | + | 40 | + | 20 | 5% |
| Example 6 | 40 | + | 60 | + | 4 | 5% |
| Example 7 | 80 | + | 16 | + | 0.8 | 5% |
| Example 8 | 40 | + | 12 | + | 12 | 15% |
| Imidacloprid | 120 | + | 0 | + | 0 | 60% |
| Bifenthrin | 0 | + | 40 | + | 0 | 70% |
| Cypermethrin | 0 | + | 60 | + | 0 | 60% |
| Lambda-cyhalothrin | 0 | | 16 | | 0 | 70% |
| Abamectin | 0 | | 0 | | 12 | 70% |
| Emamectin benzoate | 0 | | 0 | | 20 | 75% |

### Field Test 10 - Tomato - Tetranychus urticae (mites)

*Tetranychus urticae* was reared in the laboratory. The number of insect were counted, collected and then put on healthy young tomato plants. The Formulations Examples were diluted and then sprayed on the plants. After staying in a greenhouse at 21-25 °C and 80 % relative atmospheric humidity for 10 days, the remaining population was examined.

| **Test** | **Component A (g/ha)** | **+** | **Component B (g/ha)** | **+** | **Component C (g/ha)** | **Tetranychus urticae population** |
|---|---|---|---|---|---|---|
| Untreated | 0 | + | 0 | + | 0 | 90% |
| Example 1 | 40 | + | 12 | + | 2.88 | 5% |
| Example 2 | 80 | + | 16 | + | 3.2 | 5% |
| Example 3 | 120 | + | 12 | + | 2.4 | 5% |
| Example 4 | 40 | + | 12 | + | 2.88 | 5% |
| Example 5 | 120 | + | 40 | + | 20 | 10% |
| Example 6 | 40 | + | 60 | + | 4 | 5% |
| Example 7 | 80 | + | 16 | + | 0.8 | 5% |
| Example 8 | 40 | + | 12 | + | 12 | 15% |
| Imidacloprid | 120 | + | 0 | + | 0 | 70% |
| Bifenthrin | 0 | + | 40 | + | 0 | 70% |
| Cypermethrin | 0 | + | 60 | + | 0 | 75% |
| Lambda-cyhalothrin | 0 | | 16 | | 0 | 70% |
| Abamectin | 0 | | 0 | | 12 | 55% |
| Emamectin benzoate | 0 | | 0 | | 20 | 65% |

## Claims

1. An insecticidal composition comprising components:
(A) imidacloprid;
(B) bifenthrin; and
(C) abamectin.

2. The insecticidal composition according to claim 1, wherein a weight ratio of the component (A) to the component (B) is from 10:1 to 1:10, 5:1 to 1:5 or 10:3 to 3:10.

3. The insecticidal composition according to any of the preceding claims, wherein a weight ratio of the component (B) to the component (C) is from 15:1 to 1:15 or 10:1 to 1:10 or 5:1 to 1:5.

4. The insecticidal composition according to claim 1, comprising 10 % by weight imidacloprid, 3 % by weight bifenthrin, and 0.72 % by weight abamectin.

5. The insecticidal composition according to any of the preceding claims, wherein the composition is in a form of water-soluble concentrates (SL), emulsifiable concentrates (EC), emulsions (EW), oil-based suspension concentrates (OD), flowable suspensions (FS), water-dispersible granules (WG), water-soluble granules (SG), water-dispersible powders (WP), water soluble powders (SP), granules (GR), encapsulated granules (CG), fine granules (FG), macrogranules (GG), aqueous suspo-emulsions (SE), microencapsulated suspensions (CS), microgranules (MG) or preferably suspension concentrates (SC).

6. The insecticidal composition according to any of the preceding claims, further comprising one or more selected among inert fillers, surfactants, polymeric stabilizers and solid adherents.

7. The insecticidal composition according to any of the preceding claims, further comprising anti-foams, organic solvents, preservatives, antioxidants, and/or thickeners.

8. A method to prevent and/or treat insect infestations in plants, plant parts and/or surrounding by applying a synergistic insecticidal composition according to any of the preceding claims on said plant, plant parts or their surroundings.

9. The method according to claim 8, wherein the plants, plant parts or their surroundings are selected from the group consisting of cereals, fruits, leguminous plants, cucurbitaceae, citrus, vegetables, coffee and ornamentals.

10. The method according to claim 8 or 9, wherein the insect infestations are caused by stink bugs, mites, worms, thrips and whiteflies.

11. The method according to claim 8, wherein the insect infestations are caused by *Nezara viridula* (Southern green stink bug), *Tetranychus spp* (mite), *Anticarsia gemmatalis* (worm), *Caaliothrips phaseoli* (thrips), *Bemisia tabaci raça B (whitefly)* on soybean; *Nezara viridula* (Southern green stink bug), *Tetranychus spp* (mite), *Anticarsia gemmatalis* (worm), *Caaliothrips phaseoli* (thrips), *Bemisia tabaci raça B (whitefly)* on cotton; *Brevipalpus phoenicis, Leucoptera coffeella, Oligonychus ilicis* on coffee; *Bemisia tabaci raça B* (whitefly), *Bemisia tabaci* (whitefly), *Tetranychus urticae* (red spider mite), *Thrips palmi* (thrip) on tomato.

12. Use of a synergistic insecticidal composition according to any of the claims 1 - 7 to prevent and/or treat insect infestations in plants, plant parts and/or surrounding.

## Patentansprüche

1. Insektizide Zusammensetzung welche die Komponenten enthält:
(A) Imidacloprid;
(B) Bifenthrin; and
(C) Abamectin.

2. Insektizide Zusammensetzung nach Anspruch 1, worin ein Gewichtsverhältnis der Komponente (A) zu der Komponente (B) von 10:1 zu 1:10, 5:1 zu 1:5 oder 10:3 zu 3:10 ist.

3. Insektizide Zusammensetzung nach einem der Ansprüche, worin ein Gewichtsverhältnis von Komponente (B) zu Komponente (C) von 15:1 zu 1:15 oder 10:1 zu 1:10 oder 5:1 zu 1:5 ist.

4. Insektizide Zusammensetzung nach Anspruch 1, welche 10 Gew.-% Imidacloprid, 3 Gew.-% Bifenthrin, und 0,72 Gew.-% Abamectin enthält.

5. Insektizide Zusammensetzung nach einem der Ansprüche, worin die Zusammensetzung in Form von wasserlöslichen Konzentraten (SL), emulgierbaren Konzentraten (EC), Emulsionen (EW), Öl-basierten Suspensions-Konzentraten (OD), fließfähigen Suspensionen (FS), Wasser-dispergierbaren Granulaten (WG), wasserlöslichen Granulaten (SG), Wasser-dispergierbaren Pulver (WP), wasserlöslichen Pulver (SP), Granulaten (GR), verkapselten Granulaten (CG), feinen Granulaten (FG), Makrogranulaten (GG), wäßrigen Suspo-Emulsionen (SE), mikroverkapselten Suspensionen (CS), Microgranulaten (MG) oder vorzugsweise Suspensions-Konzentraten (SC) ist.

6. Insektizide Zusammensetzung nach einem der Ansprüche, welche weiter ein oder mehrere umfasst ausgewählt unter Füllmaterialien, oberflächenaktiven Mitteln, polymeren Stabilisatoren und festen Anhängern.

7. Insektizide Zusammensetzung nach einem der Ansprüche, welche weiter Antischäummittel, organische Lösungsmittel, Konservierungsmittel, Antioxidantien, und/oder Verdickungsmittel umfasst.

8. Verfahren zum Verhindern und/oder Behandeln von Insektenbefall in Pflanzen, Pflanzenteilen und/oder der Umgebung durch Aufbringen einer synergistischen insektiziden Zusammensetzung nach einem der vorstehenden Ansprüche auf die Pflanze, die Pflanzenteile oder deren Umgebung.

9. Verfahren nach Anspruch 8, wobei die Pflanzen, Pflanzenteile oder deren Umgebung ausgewählt sind aus der Gruppe bestehend aus Getreide, Früchten, Hülsenfrüchten, Kürbisgewächsen, Zitrus, Gemüse, Kaffee und Zierpflanzen.

10. Verfahren nach Anspruch 8 oder 9, worin der Insektenbefall durch Stinkwanzen, Milben, Würmer, Fransenflügler und die weisse Fliege verursacht wird.

11. Verfahren nach Anspruch 8, worin der Insektenbefall durch *Nezara viridula* (südliche grüne Stinkwanze), *Tetranychus spp* (Milbe), *Anticarsia gemmatalis* (Wurm), *Caaliothrips phaseoli* (Fransenflügler), *Bemisia tabaci raça B* (weisse Fliege) auf Sojabohnen verursacht wird; durch *Nezara viridula* (südliche grüne Stinkwanze), *Tetranychus spp* (Milbe), *Anticarsia gemmatalis* (Wurm), *Caaliothrips phaseoli* (Fransenflügler), *Bemisia tabaci raça B* (weisse Fliege) auf Baumwolle verursacht wird; durch *Brevipalpus phoenicis, Leucoptera coffeella, Oligonychus ilicis* auf Kaffee verursacht wird; durch *Bemisia tabaci raça B* (weisse Fliege), *Bemisia tabaci* (weisse Fliege), *Tetranychus urticae* (rote Spinnenmilbe), *Thrips palmi* (Fransenflügler) auf Tomate verursacht wird.

12. Verwendung einer synergistischen insektiziden Zusammensetzung nach einem der Ansprüche 1 - 7 zur Verhinderung und/oder Behandlung von Insektenbefall in Pflanzen, Pflanzenteilen und/oder deren Umgebung.

## Revendications

1. Composition insecticide comprenant les composants suivants :
(A) imidaclopride ;
(B) bifenthrine ; et
(C) abamectine.

2. Composition insecticide selon la revendication 1, dans laquelle un rapport de poids entre le composé (A) et le composé (B) est compris entre 10 :1 et 1 :10, entre 5 :1 et 1 :5 ou entre 10 :3 et 3 : 10.

3. Composition insecticide selon la revendication 1, dans laquelle un rapport de poids entre le composé (B) et le composé (C) est compris entre 15 :1 et 1 : 15, entre 10 : 1 et 1 : 10, ou entre 5 :1 et 1 :5.

4. Composition insecticide selon la revendication 1, comprenant 10% en poids d'imidacloprine, 3% en poids de bifenthrine et 0,72% en poids d'abamectine.

5. Composition insecticide selon l'une des revendications précédentes, dans laquelle la composition est sous forme de concentrés solubles dans l'eau (SL), de concentrés émulsifiables (EC), d'émulsions (EW), de concentrés de suspension à base d'huile (OD), de suspensions fluides (FS), de granulés hydrodispersibles (WG), de granulés hydrosolubles (SG), de poudres hydrodispersibles (WP), de poudres hydrosolubles (SP), de granulés (GR), de granulés encapsulés (CG), de granulés fins (FG), de macrogranules (GG), de suspo-émulsions aqueuses (SE), de suspensions microencapsulées (CS), de microgranules (MG) ou de préférence de suspensions concentrées (SC).

6. Composition insecticide selon l'une des revendications précédentes, comprenant en outre un ou plusieurs adjuvants parmi les charges inertes, les tensioactils, les stabilisants polymériques, et les adhérents solides.

7. Composition insecticide selon l'une des revendications précédentes, comprenant en outre des antimoussants, des solvants organiques, des conservateurs, des anti-oxydants, et ou des épaississants.

8. Procédé pour prévenir et/ou traiter les invasions d'insectes dans les plantes, les parties de plante et/ou les environs, en appliquant une composition insecticide synergique selon l'une des revendications précédentes sur ladite plante, lesdites parties de plantes ou lesdits environs.

9. Procédé selon la revendication 8, dans lequel les plantes, les parties de plante et leurs environs sont choisis dans le groupe constitué par les céréales, les fruits, les légumineuses, les cucurbitacées, les agrumes, les légumes, du café et des plantes décoratives.

10. Procédé selon la revendication 8 ou 9, dans lequel les invasions d'insectes sont provoquées par des punaises, des acariens, des vers, thrips et des aleurodes.

11. Procédé selon la revendication 8, dans lequel les infestations d'insectes sont provoquées par *Nezara viridula* (punaise verte du Sud), *Tetranychus spp* (acarien), *Anticarsia gemmatalis* (ver), *Caaliothrips phaseoli* (thrips), *Bemisia tabaci raça B* (aleurode) sur le soja ; *Nezara viridula* (punaise verte du Sud), *Tetranychus spp* (acarien), *Anticarsia gemmatalis* (ver), *Caliothrips phaseoli* (thrips), *Bemisia tabaci raça B* (aleurode) sur le coton *; Brevipalpus phoenicis, Leucoptera coffeella, Oligonychus ilicis* sur le café; et *Bemisia tabaci raça B* (aleurode), *Bemisia tabaci* (aleurode), *Tetranychus urticae* (tétranyque rouge), *Thrips palmi* (thrip) sur la tomate.

12. Utilisation d'une composition insecticide synergique selon l'une des revendications 1 à 7 pour prévenir et/ou traiter les invasions d'insectes dans les plantes, les parties de plante et/ou les environs.
